# EUROPEAN PATENT APPLICATION

(11) **EP 2 495 225 A1**
(43) Date of publication of application: **05.09.2012**
(21) Application number: 10826850.9
(22) Date of filing: 29.10.2010
(51) Int. Cl.: C04B 35/46, H01B 3/12, H01P 7/10

(54) **DIELECTRIC CERAMIC AND RESONATOR**

(30) Priority: 29.10.2009 JP 2009248901; 25.02.2010 JP 2010040173
(71) Applicant: Kyocera Corporation, Kyoto-shi, Kyoto 612-8501 (JP)
(72) Inventor: TOYODA, Satoshi, Kirishima-shi Kagoshima 899-4396 (JP); HIRAHARA, Seiichirou, Kirishima-shi Kagoshima 899-4312 (JP); MURAKAWA, Shunichi, Kirishima-shi Kagoshima 899-4396 (JP); KOMATSU, Tsuyoshi, Kirishima-shi Kagoshima 899-4396 (JP)
(74) Representative: Viering, Jentschura & Partner
(86) International application number: PCT/JP2010/069278
(87) International publication number: WO 2011/052720

(57) **Abstract**

Disclosed is a dielectric ceramic which is capable of stably having a desired relative dielectric constant (εr), while having high Q value and good temperature coefficient of the resonance frequency. Specifically disclosed is a dielectric ceramic which contains lanthanum, magnesium, calcium and titanium, and when the compositional formula of the components is expressed as αLa₂Oₓ·βMgO·γCaO·δTiO₂ (wherein 3 ≤ x ≤ 4), the molar ratios α, β, γ and δ satisfy the formulae below. The dielectric ceramic also contains aluminum in an amount of 5% by mass or less (excluding 0% by mass) in terms of oxides relative to 100% by mass of the above-mentioned components. 0.160 ≤ α ≤ 0.270 0.050 ≤ β ≤ 0.100 0.260 ≤ γ ≤ 0.390 0.360 ≤ δ ≤ 0.430 α + β + γ + δ = 1

## Description

### TECHNICAL FIELD

The present invention relates to dielectric ceramic and resonators using the same.

### BACKGROUND ART

Resonators are incorporated into relay base stations for mobile phones and BS antennas. A dielectric ceramic is used for the core of the resonator. The characteristics required for this dielectric ceramic include a relative dielectric constant εr, a Q-value (1/tan δ) obtained as a reciprocal of a high-frequency dielectric loss (tan δ), and a temperature coefficient τf that indicates changes in resonant frequency with respect to temperature. Because of the differences between the designs employed for the BS antenna, the relative dielectric constant required for the dielectric ceramic is varied. A higher Q-value and an excellent temperature coefficient τf of resonant frequency are required for each of the dielectric constants.

For example, the dielectric ceramic expressed by the composition formula La(Mg_{1/2}Ti_{1/2})O₃-CaTiO₃ was proposed in Patent Document 1 as the dielectric ceramic with a relative dielectric constant εr of around 45.

### RELATED ART

### PATENT DOCUMENT

Patent Document 1: Japanese Unexamined Patent Application Publication No. S61-128411

### SUMMARY OF THE INVENTION

### PROBLEMS TO BE SOLVED BY THE INVENTION

However, regarding the dielectric ceramic expressed by the La(Mg_{1/2}Ti_{1/2})O₃-CaTiO₃ composition formula described in the Patent Document 1, there is a composition region that is stably adjustable at a εr value of around 45, but the Q-value (a reciprocal of tan δ) in the composition region is low and the temperature coefficient τf of resonant frequency is impractically large on the negative side.

Therefore, an object of the present invention is to provide a dielectric ceramic which stably has a desired εr, a high Q-value, and a good temperature coefficient of the resonant frequency, and to provide a resonator using the same.

### MEANS FOR SOLVING THE PROBLEMS

According to an embodiment of the present invention, a dielectric ceramic includes lanthanum, magnesium, calcium and titanium. In a composition formula expressed by αLa₂Oₓ · βMgO · γCaO · δTiO₂ (wherein, 3 ≤ x ≤ 4), molar ratios α, β, γ, and δ satisfy the following formulae; 0.160 ≤ α≤ 0.270, 0.050 ≤ β≤ 0.100, 0.260 ≤ γ≤ 0.390, 0.360 ≤ δ≤ 0.430, and α+β+γ+δ = 1. The dielectric ceramic further includes aluminum of 5 mass% or less (excluding 0 mass%) in terms of oxide relative to 100% of the abovementioned composition. Also, in a resonator according to the present invention, a ceramic body including the abovementioned dielectric ceramic is used as a filter.

### ADVANTAGES OF THE INVENTION

According to a dielectric ceramic of the present invention, the dielectric ceramic can have a desired εr that is stably obtained, a high Q-value, and a good temperature coefficient of the resonant frequency.

According to a resonator of the present invention, Using a ceramic body that includes the dielectric ceramic as a filter, a resonator can have a desired εr that is stably obtained and a high Q-value, and can maintain stable and good performance over an extended period of time even in places with large temperature differences.

### BRIEF DESCRIPTION OF THE DRAWINGS

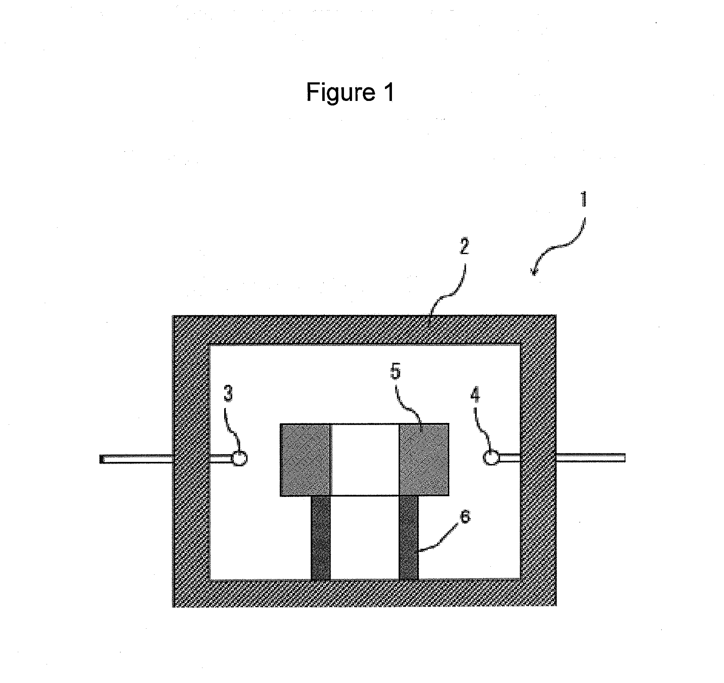

Figure 1 is an illustration schematically illustrating a partial cross-sectional view of an exemplary dielectric resonator according to an embodiment of the present invention.

### EMBODIMENTS OF THE INVENTION

Described below is a dielectric ceramic according to an embodiment of the present invention.

This dielectric ceramic contains lanthanum, magnesium, calcium, and titanium, and, when the composition formula is expressed as αLa₂Ox · βMgO · γCaO · δTiO₂, a molar ratio α, β, γ, and δ satisfies 0.160 ≤ α ≤ 0.270, 0.050 ≤ β ≤ 0.100, 0.260 ≤ γ ≤ 0.390, 0.360 ≤ δ ≤ 0.430, and α+β+γ+δ = 1, and the dielectric ceramic contains 5 mass% or less (excluding 0 mass%) of aluminum in terms of oxide relative to 100% of this component.

The reasons why the value of α, β, γ, and δ is limited to the above described range are as follows.

First, the reason for 0.160 ≤ α ≤ 0.270 is that, within this range, a relative dielectric constant (εr) of about 40.0 to 55.0 can be stably obtained, the Q-value can be high, and the absolute value of a temperature coefficient τf of the resonant frequency can be small. In particular, the lower limit of α is preferably 0.185 and the upper limit of α is preferably 0.239.

Then, the reason for 0.050 ≤ β ≤ 0.100 is that, within this range, a relative dielectric constant (εr) of about 40.0 to 55.0 can be stably obtained, the Q-value can be high, and the absolute value of the τf can be small. In particular, the lower limit of β is preferably 0.070 and the upper limit of β is preferably 0.080.

Then, the reason for 0.260 ≤ γ ≤ 0.390 is that, within this range, a relative dielectric constant (εr) of about 40.0 to 55.0 can be stably obtained, the Q-value can be high, and the absolute value of the τf can be small. In particular, the lower limit of γ is preferably 0.298 and the upper limit of γ is preferably 0.327.

Then, the reason for 0.360 ≤ δ ≤ 0.430 is that, within this range, a relative dielectric constant (εr) of about 40.0 to 55.0 can be stably obtained, the Q-value can be high, and the absolute value of the τf can be small. In particular, the lower limit of δ is preferably 0.380 and the upper limit of δ is preferably 0.399.

In addition, the reason for containing 5 mass% or less (excluding 0 mass%) of aluminum in terms of oxide relative to 100 mass% or less of the abovementioned component is that, within this range, it allows the temperature coefficient τf of resonant frequency to be closer to 0 within an operating temperature range with reducing the variation. In particular, the additive amount of aluminum is preferably within the range of 0.1 to 3 mass% or less in terms of oxide.

When aluminum is added to a La(Mg_{1/2}Ti_{1/2})O₃-CaTiO₃ based material, a hetero phase having a composition of LaAlO₃-CaTiO₃ is formed in the La(Mg_{1/2}Ti_{1/2})O₃-CaTiO₃ based material. It is believed that due to the existence of the hetero phase, the value of the temperature coefficient τf of resonant frequency is improved, thereby improving the inherent temperature characteristics. If the additive amount of aluminum is 0.1 mass% or more in terms of oxide, the amount of the formed hetero phase having the composition of LaAlO₃-CaTiO₃ will not be too short and the improvement of the value of the temperature coefficient τf of resonant frequency is advantageously facilitated.
If the additive amount of aluminum is 3 mass% or less, in terms of oxide, the amount of the formed hetero phase having the composition of LaAlO₃-CaTiO₃ will not be too much and the inherent temperature characteristics of the La(Mg_{1/2}Ti_{1/2})O₃-CaTiO₃ based material can be maintained.

The amount of aluminum in the dielectric ceramic is ascertained by pulverizing a portion of the dielectric ceramic, dissolving thus pulverized powder into a solution such as hydrochloric acid, measuring the amount of aluminum using an ICP emission spectrophotometer (Shimazu Corporation: ICPS-8100), and converting it into the amount of oxide. The error of the measuring device is expressed as n±√n, wherein the analytical value is n.

In an embodiment of the present invention, the dielectric ceramic preferably contains 20 mass% or less (excluding 0 mass%) of zinc and strontium in total in terms of oxide. Accordingly, it is possible to further improve the relative dielectric constant εr and Q-value. Regarding zinc, zinc solid dissolved in CaTiO₃ in a La(Mg_{1/2}Ti_{1/2})O₃-CaTiO₃ based material and contributes to improving the characteristics, while, regarding strontium, strontium solid dissolved in La(Mg_{1/2}Ti_{1/2}) contributes to improving the characteristics.

Regarding the content of zinc and strontium, in the same manner as in aluminum, the content of zinc and strontium is ascertained by pulverizing a portion of the dielectric ceramic, dissolving thus pulverized powder into a solution such as hydrochloric acid, and measuring the amount of Zn, Sr using an ICP emission spectrophotometer (Shimazu Corporation: ICPS-8100) and converting it into the amount of oxide. The error of the measuring device is expressed as n±√n, wherein the analytical value is n.

In an embodiment of the present invention, the dielectric ceramic preferably contains 3% or less of manganese in terms of oxide. Accordingly, at the time of firing the dielectric ceramic, oxygen generated by the valence change in manganese oxide enters the oxygen vacancy in the dielectric ceramic, thereby supplying oxygen. Consequently, it is possible to make it difficult for oxygen vacancy to occur in the dielectric ceramic, thus allowing a higher Q-value to be maintained. When manganese is contained at 3 mass% or less in terms of oxide, it can suppress manganese oxide from acting as an impurity and from negatively affecting the crystal structure itself. As a result, the mechanical properties, the relative dielectric constant and the temperature coefficient of resonant frequency can be maintained. The content of manganese is more preferably within a range of 0.01 to 2 mass% or less in terms of oxide.

Again, the content of manganese can be measured using an ICP emission spectrophotometer (Shimazu Corporation: ICPS-8100).

In an embodiment of the present invention, a dielectric ceramic preferably contains at least one of silicon, sodium, zirconium, tungsten, niobium, tantalum, copper and chromium at 0.5 mass% or less (excluding 0 mass%) in total in terms of oxide. Accordingly, sinterability of the dielectric ceramic can be improved and the dielectric ceramic may have a high density and good mechanical properties. Elements such as silicon, sodium, zirconium, tungsten, niobium, tantalum, copper, chromium, and the like, easily form a low melting compound at grain boundaries of the dielectric ceramic, and form a liquid phase at a temperature range lower than the sintering temperature of the dielectric ceramic, in order to facilitate sintering of the dielectric ceramic. When the content of at least one of silicon, sodium, zirconium, tungsten, niobium, tantalum, copper and chromium is 0.5 mass% or less in terms of oxide, the content of the low melting compound will not be too much, and the temperature dependence of the resonant frequency can be maintained. The content of at least one of silicon, sodium, zirconium, tungsten, niobium, tantalum, copper and chromium is more preferably 0.01 mass% or more and 0.4 mass% or less in total in terms of oxide.

In the same manner as aluminum, the content of at least one of con, sodium, zirconium, tungsten, niobium, tantalum, copper and chromium is ascertained by pulverizing a portion of the dielectric ceramic, dissolving thus pulverized powder into a solution such as hydrochloric acid, and measuring the total amount of con, sodium, zirconium, tungsten, niobium, tantalum, copper and chromium using an ICP emission spectrophotometer (Shimazu Corporation: ICPS-8100) to convert into the amount of oxide. The error of the measuring device is expressed as n±√n, wherein, the analytical value is n.

In an embodiment of the present invention, a dielectric ceramic has a void ratio is preferably 5% or less at surfaces and inside thereof. When the void ratio is 5% or less, the relative dielectric constant and the Q-value can be maintained, dielectric characteristics can be maintained, and the dielectric characteristics are easily stabilized. More preferably, when the average void ratio is 3% or less, dielectric characteristics are easily stabilized. In addition, when the average void ratio is 5% or less, the density of the ceramic body can be maintained, thereby allowing higher mechanical properties to be maintained. Therefore, chipping, cracking, or breakage of the ceramic body rarely occur during handling as well as when the ceramic body falls, when installing into the resonator, or when there are vibrations or impact thereto after installation in each base station, or the like.

In order to observe an area of 100 µm x 100 µm, for example, the average void ratio can be calculated by imaging several parts of the surface and the internal cross-section of the dielectric ceramic as photographs or images with a metallurgical microscope, a SEM, or the like, which is adjusted to any magnification, by analyzing the photographs or the images with an image analysis device to calculate a percentage of voids in a measured area as a void ratio, and by ascertaining the average value of the percentages. LUZEX-FS made by Nireco Corporation may be employed as the image analysis device.

In an embodiment of the present invention, a dielectric ceramic preferably contains 0.5 mass% or less (excluding 0 mass%) of phosphorus in terms of oxide. Accordingly, the strength of the dielectric ceramic can be improved. When a phosphorus oxide is added to the dielectric ceramic to be fired, the phosphorus oxide forms a liquid phase and the voids are reduced. Accordingly, the volume of the dielectric ceramic is increased and the relative dielectric constant is improved.

Next, a method of manufacturing the dielectric ceramic according to an embodiment is described below. The dielectric ceramic can be manufactured from the following processes (1) to (7).

(1) Pure powders of lanthanum oxide (La₂O₃), magnesium carbonate (MgCO₃), calcium carbonate (CaCO₃), titanium oxide (TiO₂), and oxidation aluminum (Al₂O₃) are prepared as starting materials. First, La₂O₃, MgCO₃, TiO₂, and Al₂O₃ are weighed to a desired percentage. Then, water is added to the weighed powders to wet blend and pulverized for 1 to 100 hours in a ball mill using zirconia balls or the like until the average grain size of each powder reaches 0.5 to 2.0 µm or less to obtain mixtures. At the same time, a mixture is obtained through similar processes for CaCO₃ and TiO₂ (primary formulation).

(2) After drying the mixtures, each mixture for 1 to 10 hours at 1,100 to 1,300°C is calcinated to obtain calcinated raw materials.

(3) Each of the obtained calcinated raw materials is wet pulverized with a ball mill or the like until the average grain size is 0.5 to 2 µm, then the obtained mixtures are put into containers, and the mixtures are dehydrated and passed through a mesh to obtain the desired raw materials.

(4) Each of The materials that were obtained in (3) is weighed to a desired percentage, pure water is added to the materials followed by wet blend with the ball mill using zirconia balls or the like (secondary formulation). If phosphorus is added, the total of the calcinated raw materials that has previously weighed to a desired percentage is 100%, and a phosphorus oxide of 0.5% or less may be added thereto. P₂O₃, P₂O₅, or NH₄H₂PO₄ may be used as phosphorus oxides.

(5) A 3 to 10 mass% binder is added, and it is dehydrated, and then, it is granulated or sized using a spray-dry method or the like, and the obtained granulated bodies, sized powders or the like are formed into any shape using a die pressing method, cold isostatic pressing method, extrusion molding method, or the like. The form of the granulated bodies, the sized powders or the like may be not only a solid but also a mixture of solid and liquid such as slurry. In this case, the liquid may be a liquid other than water. For example, the liquid may be isopropyl alcohol (IPA), methanol, ethanol, toluene, acetone or the like.

(6) The obtained molded products are kept at 1,500 to 1,700°C in air for 1 to 10 hours to be fired to obtain fired products. More preferably, the obtained molded products are fired at 1,550 to 1,650°C.

(7) If necessary, the obtained fired products are subjected to a heat treatment at 1,500 to 1,700°C for 1 minute to 100 hours, under a pressure of 30 to 300 MPa in gas containing oxygen at 5 to 30 volume % or greater. The heat treatment may be performed more preferably at a temperature of 1,550 to 1,650°C for 20 minutes to 3 hours, under a pressure of 1000 to 2500 atm.

Next, an example of a resonator that uses the dielectric ceramic according to the present embodiment is described below. As shown in Figure 1, a TE mode type resonator 1 includes a metal case 2, an input terminal 3, an output terminal 4, a ceramic body 5 and a mounting stand 6. The metal case 2 is made of a metal such as lightweight aluminum. The input terminal 3 and the output terminal 4 are provided on both sides opposing each other in the inner walls of the metal case 2. The ceramic body 5 contains a dielectric ceramic according to the present embodiment. The ceramic body 5 is arranged between the input terminal 3 and the output terminal 4 and used as a filter. In the resonator 1, when a microwave is input from the input terminal 3, the input microwave is confined in the ceramic body 5 by the reflection in the boundary between the ceramic body 5 and a free space, and the resonance is caused at a specific frequency. Subsequently, the resonated signal is electromagnetically coupled to the output terminal 4 and output to the outside of the metal case 2.

In this manner, the dielectric ceramic according to the present embodiment can be suitably used as a material for various resonators used for a base station of a mobile phone and a BS antenna.

The dielectric ceramic according to the present embodiment is not limited as above. The input terminal 3 and the output terminal 4 may be directly provided on the ceramic body 5. Although the ceramic body 5 is a resonant medium comprising the dielectric ceramic according to the present embodiment with a predefined shape, the shape may be a rectangular parallelepiped, a cube, a plate, a disc, a cylinder, a polygonal column, or other solid shapes capable of resonance. The frequency of the input high-frequency signal may be around 500 MHz to 500 GHz. Around 2 GHz to 80 GHz is preferable for the practical use as a resonant frequency.

In addition to being used as a material for various resonators, the dielectric ceramic according to the present embodiment may be used as a material for a dielectric substrate material for a monolithic IC (MIC), a material for a dielectric waveguide, a dielectric material of a laminated ceramic capacitor, or the like.

### Example 1

Various samples were made by changing the molar ratios α, β, γ and δ of La(Mg_{1/2}Ti_{1/2})O₃-CaTiO₃ based materials and the additive amount of aluminum to measure relative dielectric constants εr, the Q-values, and temperature coefficients of resonant frequency. A method of manufacturing and a method of measuring characteristics of the samples are described below.

As starting materials, La₂O₃, MgCO₃, CaCO₃, TiO₂, and Al₂O₃ with a purity of 99.5% or more were prepared.

Each material was weighed in order to be of the percentage described in Table 1. Then, a mixture of La₂O₃, MgCO₃, TiO₂, and Al₂O₃, and a mixture of CaCO₃ and TiO₂ were each charged in separate ball mills and pure water was added to each of the ball mills. Next, a primary formulation was performed by wet blending and pulverizing the products with the ball mill using zirconia balls until the average grain size of the mixed raw materials was within the range of 0.5 to 2 µm to obtain two mixtures.

Subsequently, each of the mixtures was dried, calcinated at 1,200°C, and wet pulverized using a ball mill until the average grain size was 0.5 to 2 µm to obtain two kinds of calcinated raw materials.

Then, the abovementioned two kinds of calcinated raw materials were weighed and mixed so as to have values of La₂O₃, MgCO₃, CaCO₃, TiO₂ described in samples No. 1 to 31 of Table 1, and then pure water was added to the mixtures and wet blended for 1 to 100 hours with a ball mill using zirconia balls or the like to obtain several kinds of slurries.

A binder of 1 to 10 mass% was added to the abovementioned slurries, mixed, and then dehydrated, and these slurries were spray granulated with a spray dryer to obtain secondary raw materials. These secondary raw materials were molded as a cylindrical body with ϕ 20 mm and a height of 15 mm by a die press molding method to obtain molded products.

The obtained molded products were kept and fired at 1,500 to 1,700°C in air for 10 hours to obtain samples No. 1 to 31. These samples were polished on the upper surface, bottom surface, and a portion of the side surface after firing, and cleaned with ultrasonic waves in acetone.

Next, dielectric characteristics were evaluated for these samples No. 1 to 31. In the evaluation of the dielectric characteristics, the relative dielectric constants εr and the Q-values were measured at a measuring frequency of 6 to 7 GHz for the abovementioned samples by a dielectric rod resonator method (International Standard IEC 61338-1-3 (1999)). The Q-value was converted into a Qf value expressed as a product of the Q-value and a measuring frequency f. The resonant frequency within the temperature range of -40 to 85°C was measured, and the temperature coefficients τf of resonant frequency at 20 to 85°C and -40 to 20°C were calculated respectively on the basis of the resonant frequency at 20°C.

The results are shown in Table 1. Described in Table 1 are the composition and dielectric characteristics with respect to the dielectric ceramic from which relative dielectric constants εr of around 40.0 to 55.0 was obtained. These samples stably provided desired relative dielectric constants of around 40.0 to 55.0; however, variations were found in their Q-values and values of the temperature coefficient of resonant frequency τf. In Table 1, as for all samples No. 1 to 31, particularly, the ranges in which the relative dielectric constants εr is within the range of 40.0 to 55.0, Q-value is 25,000 or higher, and the absolute value differences of temperature coefficients within each of the temperature ranges of 25 to 85°C and -40 to 25°C are within 2 are determined as a better range. In Table 1, a ○ mark was put on samples having better dielectric characteristics.

**Table 1**

| Sample No. | La₂O₃ | MgO | CaO | TiO₂ | Amount of added aluminum oxide (mass%) | Dielectric characteristics | | | |
|---|---|---|---|---|---|---|---|---|---|
| | α (mol%) | β (mol%) | γ (mol%) | δ (mol%) | | Relative dielectric constant εr | Quality coefficient Q | Temperature coefficient Tf 20~85°C | Temperature coefficient Tf -40~20°C |
| 1 | 0.155 | 0.050 | 0.375 | 0.421 | 3.0 | 55.2 | 27400 | +32.5 | +31.5 |
| 2 | 0.160 | 0.052 | 0.370 | 0.418 | 3.0 | 54.8 | 28200 | +30.5 | +29.8 |
| 3 | 0.210 | 0.072 | 0.322 | 0.396 | 3.0 | 47.9 | 40500 | +0.7 | +0.4 |
| 4 | 0.240 | 0.084 | 0.294 | 0.382 | 3.0 | 45.0 | 43200 | -10.2 | -10.7 |
| 5 | 0.270 | 0.097 | 0.265 | 0.368 | 3.0 | 40.2 | 48700 | -30.5 | -31.4 |
| 6 | 0.275 | 0.099 | 0.260 | 0.365 | 3.0 | 39.6 | 49100 | -32.6 | -33.0 |
| 7 | 0.216 | 0.045 | 0.331 | 0.407 | 3.0 | 47.2 | 24300 | +8.6 | +9.1 |
| 8 | 0.215 | 0.050 | 0.330 | 0.405 | 3.0 | 47.6 | 32400 | +6.7 | +6.5 |
| 9 | 0.211 | 0.070 | 0.323 | 0.396 | 3.0 | 48.7 | 39800 | +5.1 | +4.7 |
| 10 | 0.209 | 0.080 | 0.320 | 0.392 | 3.0 | 48.5 | 39100 | +4.5 | +4.3 |
| 11 | 0.204 | 0.100 | 0.313 | 0.383 | 3.0 | 47.2 | 30500 | +2.5 | +2.7 |
| 12 | 0.203 | 0.105 | 0.311 | 0.381 | 3.0 | 46.3 | 24600 | +0.7 | +0.1 |
| 13 | 0.188 | 0.052 | 0.395 | 0.365 | 3.0 | 50.6 | 21400 | +10.5 | +9.8 |
| 14 | 0.185 | 0.061 | 0.390 | 0.365 | 3.0 | 50.2 | 25600 | +10.2 | +9.7 |
| 15 | 0.213 | 0.063 | 0.327 | 0.397 | 3.0 | 49.1 | 37200 | +6.9 | +6.7 |
| 16 | 0.239 | 0.078 | 0.298 | 0.385 | 3.0 | 45.4 | 36900 | -8.9 | -9.5 |
| 17 | 0.250 | 0.091 | 0.260 | 0.400 | 3.0 | 42.1 | 29300 | -20.2 | -20.8 |
| 18 | 0.245 | 0.096 | 0.255 | 0.405 | 3.0 | 41.4 | 23200 | -21.4 | -21.8 |
| 19 | 0.224 | 0.078 | 0.343 | 0.355 | 3.0 | 49.7 | 21500 | +4.6 | +4.2 |
| 20 | 0.222 | 0.077 | 0.341 | 0.360 | 3.0 | 49.5 | 26800 | +4.3 | +3.5 |
| 21 | 0.216 | 0.074 | 0.330 | 0.380 | 3.0 | 49.2 | 38500 | +2.6 | +2.3 |
| 22 | 0.209 | 0.071 | 0.320 | 0.399 | 3.0 | 48.9 | 39600 | +1.1 | +0.3 |
| 23 | 0.199 | 0.067 | 0.304 | 0.430 | 3.0 | 48.1 | 32500 | +0.2 | -0.6 |
| 24 | 0.197 | 0.066 | 0.302 | 0.435 | 3.0 | 47.3 | 24800 | -0.9 | -1.6 |
| 25 | 0.230 | 0.100 | 0.281 | 0.390 | 0.0 | 48.5 | 39200 | +0.9 | +3.2 |
| 26 | 0.227 | 0.099 | 0.284 | 0.391 | 0.1 | 48.2 | 38600 | +0.3 | +2.1 |
| 27 | 0.223 | 0.095 | 0.290 | 0.392 | 0.5 | 48.1 | 39400 | +1.2 | +2.6 |
| 28 | 0.220 | 0.089 | 0.298 | 0.393 | 1.0 | 48.6 | 40100 | +0.5 | +1.6 |
| 29 | 0.211 | 0.070 | 0.323 | 0.396 | 3.0 | 48.1 | 40800 | +0.2 | +0.4 |
| 30 | 0.206 | 0.053 | 0.343 | 0.397 | 5.0 | 47.7 | 39600 | +0.4 | -0.8 |
| 31 | 0.208 | 0.050 | 0.346 | 0.396 | 5.5 | 47.5 | 39200 | -0.8 | -3.0 |

According to Table 1, when molar ratios α, β, γ and δ satisfy 0.160 ≤ α ≤ 0.270, 0.050 ≤ β ≤ 0.100, 0.260 ≤ γ ≤ 0.390, 0.360 ≤ δ≤ 0.430, and α+β+γ+δ = 1 (rounded off to the nearest whole number), as well as containing 5% or less (excluding 0%) of aluminum in terms of oxide, better characteristics are obtained.

As for sample No. 1 shown in Table 1, the value of α was less than 0.160 and relative dielectric constant εr was 55.2, which was a slightly higher value.

As for sample No. 7, the value of β was less than 0.050, while the Q-value was less than 25,000, which was slightly lower compared to the other samples. As for sample No. 12, the value of β exceeded 0.100, while the Q-value was less than 25,000, which was slightly lower compared to the other samples.

As for sample No. 13, the value of γ exceeded 0.390, while the Q-value was less than 25,000, which was slightly lower compared to the other samples. As for sample No. 18, the value of γ was less than 0.260, while the Q-value was less than 25,000, which was slightly lower compared to the other samples.

As for sample No. 19, the value of δ was less than 0.360, while the Q-value was less than 25,000, which was slightly lower compared to the other samples. As for sample No. 24, the value of δ exceeded 0.430, while the Q-value was less than 25,000, which was slightly lower compared to the other samples.

As for sample No. 25, the content of aluminum oxide was 0 mass%, while a difference between the absolute values of temperature coefficient of resonant frequency at 25 to 85°C and -40 to 25°C exceeded 2. As for sample No. 31, the content of the aluminum oxide exceeded 5.0 mass%, while a difference between the absolute values of temperature coefficient of resonant frequency at 25 to 85°C and -40 to 25°C exceeded 2.

As for samples No. 2 to 5, 8 to 11, 14 to 17, 20 to 23, 26 to 30, all of relative dielectric constants εr, Q-values, resonant frequency τf, and differences between the absolute values of the temperature coefficient τf of resonant frequency at 25 to 85°C and -40 to 25°C indicated that the values were within an better range compared to the abovementioned samples.

According to the abovementioned results, when the molar ratios α, β, γ and δ satisfy 0.160 ≤ α ≤ 0.270, 0.050 ≤ β ≤ 0.100, 0.260 ≤ γ ≤ 0.390, 0.360 ≤ δ ≤ 0.430, and α+β+γ+δ = 1 (rounded off to the nearest whole number), as well as containing 5 mass% or less (excluding 0%) of aluminum in terms of oxide, the relative dielectric constant of around 40.0 to 55.0 is stably obtained, in addition to high Q-values and good temperature coefficients being obtained.

### Example 2

Next, a test was performed for confirming the influence on the dielectric characteristics of the content of zinc and strontium in the La(Mg_{1/2}Ti_{1/2})O₃-CaTiO₃ based material according to the present embodiment.

The samples used for the test were made by preparing La₂O₃, MgCO₃, CaCO₃, TiO₂, and Al₂O₃ with a purity of 99.5% or more as starting materials. Each of the materials was weighed in order to be of the same percentage as sample No. 16 described in Table 1. Then, as mixed raw materials, a mixture of La₂O₃, MgCO₃, TiO₂, and Al₂O₃, and a mixture of CaCO₃ and TiO₂ were prepared.

Zinc oxide (ZnO) and strontium oxide (SrO) with a purity of 99.5% or more were prepared in advance. The zinc oxide (ZnO) was added to the mixed raw material of La₂O₃, MgCO₃, TiO₂, and Al₂O₃ and the strontium oxide (SrO) was added to the mixed raw material of CaCO₃ and TiO₂ at the percentage described in Table 2, respectively, to prepare mixed raw materials in which the additive amount of zinc and strontium was changed.

Then, the mixed raw material of La₂O₃, MgCO₃, TiO₂, and Al₂O₃, and the mixed raw material of CaCO₃ and TiO₂ were charged in separate ball mills and pure water was added to each of the ball mills. Next, a primary formulation was performed by wet blending and pulverizing the products with the ball mill using zirconia balls until the average grain size of the mixed raw materials was within the range of 0.5 to 2 µm to obtain two mixtures.

Subsequently, samples No. 32 to 47 were prepared by using the same manufacturing method as described in Example 1. the relative dielectric constants εr and the Q-values were measured by the same measuring method as described in Example 1 for samples No. 32 to 47that was manufactured.

The test results are shown in Table 2.

**Table 2**

| Sample No. | ZnO (mass%) | SrO (mass%) | Dielectric characteristics | |
|---|---|---|---|---|
| | | | Relative dielectric constant εr | Quality coefficient Q |
| 32 | 0.10 | - | 45.2 | 37000 |
| 33 | 1.00 | - | 45.0 | 37300 |
| 34 | 5.00 | - | 44.5 | 37500 |
| 35 | 20.00 | - | 42.6 | 37200 |
| 36 | 20.10 | - | 42.3 | 36700 |
| 37 | - | 0.10 | 45.6 | 37100 |
| 38 | - | 1.00 | 45.9 | 37600 |
| 39 | - | 5.00 | 46.4 | 38200 |
| 40 | - | 20.00 | 48.9 | 37000 |
| 41 | - | 20.10 | 49.1 | 36800 |
| 42 | 1.00 | 1.00 | 45.2 | 37300 |
| 43 | 1.00 | 5.00 | 46.1 | 37900 |
| 44 | 5.00 | 1.00 | 45.0 | 38100 |
| 45 | 10.00 | 10.00 | 45.4 | 37100 |
| 46 | 11.00 | 10.00 | 45.0 | 36700 |
| 47 | 10.00 | 11.00 | 45.7 | 36600 |

In Table 2, samples No. 32 to 47 provided relative dielectric constants of around 40.0 to 55.0 and high Q-values; however, samples No. 32 to 36, to which only zinc oxide was added, indicated a tendency for the relative dielectric constants to decrease and the Q-values to decrease after reaching a peak at around 37,500 as the additive amount increased. Samples No. 37 to 41, to which only strontium was added, indicated a tendency in which the relative dielectric constants increased as the additive amount increased and the Q-values decreased after reaching a peak at around 38,000 as the additive amount increased.

Samples No. 42 to 47, to which zinc and strontium were added, indicated a tendency in which the relative dielectric constants indicated values around 45.0. However, samples No. 46 and 47, in which the additive amount exceeded 20 mass% in total in terms of oxide, indicated a tendency in which the Q-values decreased to less than 37,000 compared to samples No. 42 to 45.

### Example 3

Next, a test was performed for confirming the influence on the dielectric characteristics of the content of manganese in the La(Mg_{1/2}Ti_{1/2})O₃-CaTiO₃ based material according to the present embodiment.

The samples used for the test were made by the same manufacturing method as described in Example 1 except that previously prepared manganese carbonate (MnCO₃) with a purity of 99.5% or more was added at the amount described in Table 3 when two kinds of calcinated raw materials were mixed. The composition for the test was the same composition as the sample No. 16 in Example 1 except that manganese carbonate was added. As for manufactured samples No. 48 to 53, relative dielectric constants εr, Q-values and temperature coefficients τf of resonant frequency were measured by the same measuring method as described in Example 1.

The test results are shown in Table 3.

**Table 3**

| Sample No. | MnCO₃ (mass%) | Dielectric characteristics | | | |
|---|---|---|---|---|---|
| | | Relative dielectric constant | Quality coefficient Q | Temperature coefficient Tf 20~85°C | Temperature coefficient Tf -40~20°C |
| 48 | 0.01 | 45.4 | 36800 | -8.7 | -9.4 |
| 49 | 0.20 | 45.6 | 37000 | -8.3 | -8.9 |
| 50 | 1.00 | 45.8 | 37100 | -7.8 | -8.3 |
| 51 | 2.00 | 45.8 | 37400 | -7.4 | -7.6 |
| 52 | 3.00 | 45.9 | 36400 | -6.8 | -6.9 |
| 53 | 3.10 | 45.9 | 35900 | -6.6 | -6.7 |

In Table 3, samples No. 48 to 53 provided relative dielectric constants stably of around 40.0 to 55.0, high Q-values and good temperature coefficients; however, the Q-value indicated a tendency to decrease after reaching a peak at around 37,400 as the additive amount of manganese carbonate increased. It was confirmed that the Q-value particularly tended to decrease when the content of manganese carbonate exceeded 3 mass%. Therefore, it was confirmed that when the content of manganese carbonate was 3 mass% or less, it was possible to provide a relative dielectric constant, a Q-value, and a difference between absolute values of the temperature coefficient τf of resonant frequency that are equal or more than those of sample No. 16 in Example 1.

### Example 4

Next, a test was performed for confirming the influence on the dielectric characteristics of the total contents of silicon, sodium, zirconium, tungsten, niobium, copper and chromium in the La(Mg_{1/2}Ti_{1/2})O₃-CaTiO₃ based material according to the present embodiment.

The samples used for the test were manufactured by the same manufacturing method as described in Example 1 except that at least one of previously prepared silicon oxide (SiO₂), sodium hydroxide (NaOH), zirconium oxide (ZrO₂), tungsten oxide (WO₃), niobium oxide (Nb₂O₅), tantalum oxide (Ta₂O₅), cupper oxide (CuO) and chromium oxide (Cr₂O₃) was added by the amount described in Table 4 when two kinds of calcinated raw materials were mixed. The composition for the test was the same composition as sample No. 16 in Example 1 except for the content of each of the abovementioned components, and the components, in which at least one of silicon, sodium, zirconium, tungsten, niobium, tantalum, copper and chromium was added thereto in the mass percentages described in Table 4. As for manufactured samples No. 54 to 59, relative dielectric constants εr, Q-values and temperature coefficients τf of resonant frequency were measured by the same measuring method as described in Example 1.

The results are shown in Table 4.

**Table 4**

| Sample No. | SiO₂ mass % | NaOH mass % | ZrO₂ mass % | WO₃ mass % | Nb₂O₅ mass % | Ta₂O₅ mass % | CuO mass % | Cr₂O₃ mass % | Total mass % | Dielectric characteristics | | | |
|---|---|---|---|---|---|---|---|---|---|---|---|---|---|
| | | | | | | | | | | Relative dielectric constant | Quality coefficient Q | Temperature coefficient Tf 20~85°C | Temperature coefficient Tf -40~20°C |
| 54 | 0.003 | - | 0.00 5 | - | 0.002 | - | - | - | 0.01 | 45.1 | 37100 | -8.7 | -9.5 |
| 55 | 0.01 | - | 0.05 | - | 0.01 | - | - | 0.01 | 0.08 | 45.3 | 37900 | -8.6 | -9.4 |
| 56 | 0.05 | 0.01 | 0.05 | 0.01 | 0.01 | 0.01 | 0.01 | 0.01 | 0.17 | 45.7 | 38100 | -8.4 | -9.0 |
| 57 | 0.10 | 0.02 | 0.10 | 0.02 | 0.10 | 0.02 | 0.02 | 0.01 | 0.40 | 46.2 | 37200 | -7.4 | -7.9 |
| 58 | 0.10 | 0.02 | 0.30 | 0.02 | 0.10 | 0.02 | 0.02 | 0.02 | 0.50 | 46.5 | 36400 | -6.9 | -7.4 |
| 59 | 0.10 | 0.02 | 0.32 | 0.02 | 0.10 | 0.02 | 0.02 | 0.02 | 0.52 | 46.9 | 34900 | -6.8 | -7.4 |

In Table 4, samples No. 48 to 53 samples No. 54 to 59 provided relative dielectric constants stably of around 40.0 to 55.0, high Q-values and good temperature coefficients; however, the Q-value was decreased after reaching a peak at around 38,100 as the total additive amount of silicon, sodium, zirconium, tungsten, niobium, tantalum, copper and chromium increased. It was confirmed that the Q-value particularly tended to decrease when the total content of silicon, sodium, zirconium, tungsten, niobium, tantalum, copper and chromium exceeded 0.5 mass% in terms of oxide. Therefore, it was confirmed that when the content was 0.5 mass% or less, it was possible to provide a relative dielectric constant, a Q-value, and a difference between absolute values of the temperature coefficient τf of resonant frequency that are equal or more than those of sample No. 16 in Example 1.

### Example 5

Next, a test was performed for confirming the influence on the dielectric characteristics by the void ratio of the La(Mg_{1/2}Ti_{1/2})O₃-CaTiO₃ based material according to the present embodiment.

The samples used for the test were made by the same manufacturing method as described in Example 1 except that the time of keeping and firing was changed to 10, 8, 6, 4, 3, and 2 hours, respectively. The average void ratio becomes larger as the time of keeping and firing is made longer. As for manufactured samples No. 60 to 65, relative dielectric constants εr, Q-values, and temperature coefficients τf of resonant frequency were measured by the same measuring method as the method described in Example 1. As for the void ratio, SEM photographs of several parts of the dielectric ceramic surface were taken so as to be able to observe an area of 100 µm x 100 µm, these photographs were analyzed with an image analysis device (Nireco Corporation: LUZEX-FS), and a percentage of the area that the voids occupy in a measured area was calculated, followed by calculating a average value.

The test results are shown in Table 5.

**Table 5**

| Sample No. | Average void ratio (%) | Dielectric characteristics | | | |
|---|---|---|---|---|---|
| | | Relative dielectric constant | Quality coefficient Q | Temperature coefficient Tf 20~85°C | Temperature coefficient Tf -40~20°C |
| 60 | 0.1 | 45.5 | 36800 | -8.9 | -9.6 |
| 61 | 0.8 | 45.3 | 36900 | -8.8 | -9.5 |
| 62 | 2.5 | 44.5 | 37100 | -8.8 | -9.6 |
| 63 | 3.8 | 44.1 | 37000 | -8.5 | -9.4 |
| 64 | 5.0 | 43.5 | 36400 | -8.6 | -9.4 |
| 65 | 5.1 | 43.4 | 36000 | -8.7 | -9.5 |

In Table 5, the relative dielectric constant indicated a tendency to decrease as the average void ratio became larger, and the Q-value indicated a tendency to decrease after reaching a peak at around 37,100 as the average void ratio became larger. It was confirmed that the Q-value particularly tended to decrease when the average void ratio exceeded 5%.

### Example 6

Next, a test was performed for confirming the influence on the dielectric characteristics and strength of an addition of phosphorus to the La(Mg_{1/2}Ti_{1/2})O₃-CaTiO₃ based material according to the present embodiment.

In the test, samples No. 66 to 70 were made by the same manufacturing method as described in Example 1 except that phosphorus at the amount described in Table 6 in terms of P₂O₅ of phosphorus was added at the time of secondary formulation to the samples in which the values of the molar ratios α, β, γ and δ in a composition formula of αLa₂Oₓ · βMgO · γCaO · δTiO₂ (wherein, 3 ≤ x ≤ 4) and the amount of added aluminum in terms of oxide relative to 100 mass% of the component expressed by the abovementioned composition formula were same as those in the sample of No. 29 of Example 1.

As for manufactured samples No. 66 to 70, relative dielectric constants and Q-values were measured by the same measuring method as described in Example 1.

Each of the raw materials of samples No. 66 to 70 were molded into 10 pieces each having a prismatic shape with 60 mm in length, the pieces were fired by the same firing method as described in Example 1. Each of the obtained prismatic sintered products was ground, polished, and washed with acetone so as to make a specimen shape compliant with JIS R 1601-1995. Then, a three-point bending strength test was performed on each of the obtained prismatic products to calculate their average three-point bending strength of n=10 pieces.

The results are shown in Table 6.

**Table 6**

| Sample No. | P₂O₅ Addirive amount (mass%) | Dielectric characteristics | | Strength (MPa) |
|---|---|---|---|---|
| | | Relative dielectric constant | Quality coefficient Q | |
| 66 | 0.01 | 47.9 | 40500 | 234 |
| 67 | 0.10 | 48.0 | 40100 | 242 |
| 68 | 0.30 | 48.1 | 39800 | 255 |
| 69 | 0.50 | 48.3 | 39500 | 263 |
| 70 | 0.55 | 48.3 | 37000 | 265 |

In Table 6, the relative dielectric constant indicated a tendency to increase as the additive amount of P₂O₅ increased, and the Q-value indicated a tendency to increase after reaching a peak of around 40,100 as the additive amount of P₂O₅ increased. It was confirmed that the Q-value particularly tended to decrease when the additive amount of P₂O₅ exceeded 0.5 mass%. Therefore, it was confirmed that the relative dielectric constant, the Q-value and the strength were improved when 0.5 mass% or less (excluding 0 mass%) of P₂O₅ is included.

### REFERENCE NUMERALS

1 resonator
2 metal case
3 input terminal
4 output terminal
5 ceramic body
6 mounting stand

## Claims

1. A dielectric ceramic, comprising lanthanum, magnesium, calcium and titanium, wherein
in a composition formula expressed by αLa₂Oₓ · βMgO · γCaO · δTiO₂ (wherein, 3 ≤ x ≤ 4), molar ratios α, β, γ, and δ satisfy the following formulae of:
0.160 ≤ α≤ 0.270;
0.050 ≤ β≤ 0.100;
0.260 ≤ γ≤ 0.390;
0.360 ≤ δ≤ 0.430; and
α+β+γ+δ = 1, and
the dielectric ceramic further comprises aluminum of 5 mass% or less (excluding 0 mass%) in terms of oxide relative to 100% of the abovementioned composition.

2. The dielectric ceramic according to claim 1, further comprising
zinc and strontium of 20 mass% or less (excluding 0 mass%) in terms of oxide in total.

3. The dielectric ceramic according to claim 1 or 2, further comprising manganese of 3 mass% or less (excluding 0 mass%) in terms of oxide.

4. The dielectric ceramic according to any one of claims 1 to 3, further comprising
at least one of silicon, sodium, zirconium, tungsten, niobium, tantalum, copper and chromium of 0.5 mass% or less (excluding 0 mass%) in terms of oxide in total.

5. The dielectric ceramic according to any one of claims 1 to 4, wherein
the average void ratio is 5% or less.

6. The dielectric ceramic according to any one of claims 1 to 5, further comprising
phosphorus of 0.5 mass% or less (excluding 0 mass%) in terms of oxide.

7. A resonator in which a ceramic body comprising dielectric ceramic according to any one of claims 1 to 6 is used as a filter.
